# EUROPEAN PATENT SPECIFICATION

(11) **EP 2 263 944 B1**
(45) Date of publication and mention of the grant of the patent: **02.05.2012**
(21) Application number: 09380120.7
(22) Date of filing: 17.06.2009
(51) Int. Cl.: B65B 69/00, B65G 47/252, G01N 21/90

(54) **Installation for the processing of trays**
Anlage zur Verarbeitung von Schalen
Installation pour le traitement de plateaux

(43) Date of publication of application: 22.12.2010
(73) Proprietor: COFARES, Sociedad Cooperativa Farmacéutica Espanola, 28049 Madrid (ES); HEBER S.L., 28970 Humanes Madrid (ES)
(72) Inventor: Gomez Blanco, Jesus Angel, 28049 Madrid (ES); Bernabeu Avila, Juan Antonio, 28970 Humanes Madrid (ES)
(74) Representative: Vicario Cubillo, Marcos

(56) References cited:
- DE-A1- 4 116 183
- FR-A- 2 746 502
- GB-A- 710 251
- GB-A- 900 058
- US-A- 3 651 937

## Description

### PURPOSE OF THE INVENTION

This invention refers to an installation that has been especially conceived for the processing of trays, of the kind used in product distribution lines of very diverse types, in which, once the content is extracted from them, they are returned to the distribution line to be used again.

The purpose of the invention is to provide an installation by which the emptying of solids that may be in each tray is carried out in a totally automatic way prior to its subsequent use, including means to discriminate the entering trays, so that the trays that arrive wet or are dirtier than the established work levels are diverted to an area where the entering trays will be processed corresponding to their cleaning.

Thus, the purpose of the invention is to provide an installation by which standards of cleanliness are guaranteed for the trays that are delivered to the warehouse.

The invention has been especially conceived to be applied in the pharmaceutical sector, but obviously it can be applicable in other sectors in which similar features are required.

### BACKGROUND OF THE INVENTION

As it is well known, in the preferred area of application of the invention, as well as in other areas, distribution lines are used in factories in which the products, such as boxes of medicine and similar, are placed in trays, appropriately identified by means of bar codes or any other technology, so that by the conveyor belts, roller chains and similar, and the corresponding sensors and readers, the products are classified and distributed, according to the logistics of each case.

As a logical result, once the products are extracted from the trays, the latter are reused indefinitely, for which, and due to the generation of waste in them, such as scraps of papers, cardboard, dirt, etc., these trays need to be processed so that they present an acceptable level of cleanliness.

In this regard, the used trays are stacked and transported to a tray processing line, in which a separating machine is set up that puts the trays on a conveyor belt of the same type as used in the overturning machine, which hooks onto the trays, either lengthwise or crosswise, and turns them over a discard bin, in order to then return them to their initial position on the transport line.

This type of machine presents a problem, which is basically focused on the follow aspects:
- Turning the trays over does not achieve as effective an emptying as in the case in which these trays were turned over and thumped, since the papers, due to static electricity, tend to adhere to the walls of the tray, not being released on many occasions.
- This type of machinery is complex, and consequently costly.
- The overturning process is conditioned by the process of separating the trays, so that the chain continually has to be stopping, in such a way that until the overturning machine has finished its work, the separator does not proceed to separate a new tray, producing unproductive dead time.
- The overturning process in the best of the cases only permits the elimination of solid contents in the trays, but it does not however eliminate the dirt or moisture that might be inside them.

### DESCRIPTION OF THE INVENTION

The tray processing installation that the invention proposes solves in a fully satisfactory way the aforementioned problem expressed in the different aspects, providing a high-quality cleaning system, totally automated, and with noticeable less work time.

To achieve this, the invention is comprised by a roller line, in which four stages are set up: a first stage of separating the trays, a second stage of overturning and emptying them, a third stage of inspecting for dirt and discrimination, and a fourth stage of stacking in uniform stacks.

Specifically, at the entry of the roller line a lifting machine is connected which is in charge of raising the stack of trays to the level of the conveyor rollers where this stack is transported to a separator, which, by means of some claws driven hydraulically and vertically moveable, allow separating the lower tray from the stack by raising said stack; this tray will advance through the roller line to an overturning machine, in which a series of slanted conveyor belts and rotating supports receive and overturn the trays; the tray is overturned by the simple effect of gravity, dumping its contents into a waste collection bin, proceeding then and in the same manner to being overturned again to adopt its initial position.

The empty tray is taken, on the aforementioned roller line to a machine that inspects for dirt by artificial vision, in which is attached a camera connected to hardware with programmed software which detects the possible adhered dirt as well as moisture, so that at the outlet of this machine the roller line diverges into two branches, one towards the belts corresponding to the trays that did not pass the required standards of cleanliness and a main branch that leads to a stacking machine, with a structure similar to the separating machine, but with the opposite function.

Finally, at the outlet of the stacking machine, a diverter is set up which sends each stack of trays towards different roller chains that take these stacks to the different warehouses.

### DESCRIPTION OF THE DRAWINGS

In order to complement the description that is being made and for the purpose of helping to understand better the characteristics of the invention, in accordance with a preferred example of its practical realisation, a set of drawings are attached in which the following has been presented as an example but it is not limited to it:
Figure 1. It shows a layout of an installation for the processing of trays in accordance with the purpose of this invention.
Figure 2. Shows a close up of the lifting device that is included in the installation of the previous figure, in which, for reasons of simplification, a stack of trays is presented in which only a small number of them is shown although the system is planned to work with stacks of around 25 trays.
Figure 3. This shows a side-view close up of the separating machine that is included in the installation of Figure 1.
Figure 4. It shows a side-view close up of the overturning machine that is included in the installation of Figure 1.
Figure 5. It shows a side-view and sectional close up of the machine that inspects for dirt by artificial vision that is included in the installation of Figure 1.
Figure 6. This shows a close-up profile of the diverter that is included in the installation of Figure 1, located at the outlet of the machine that inspects for dirt by artificial vision.
Figure 7. This shows a side-view close up of the stacking machine that is included in the installation of Figure 1.

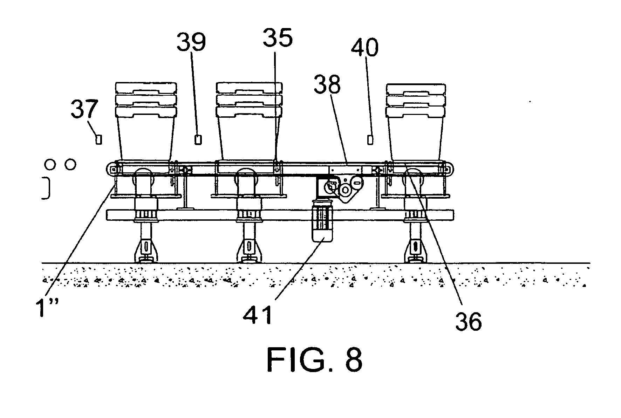

Figure 8. This shows a close-up profile of the diverter that is located at the outlet of the installation of Figure 1.

### PREFERRED REALISATION OF THE INVENTION

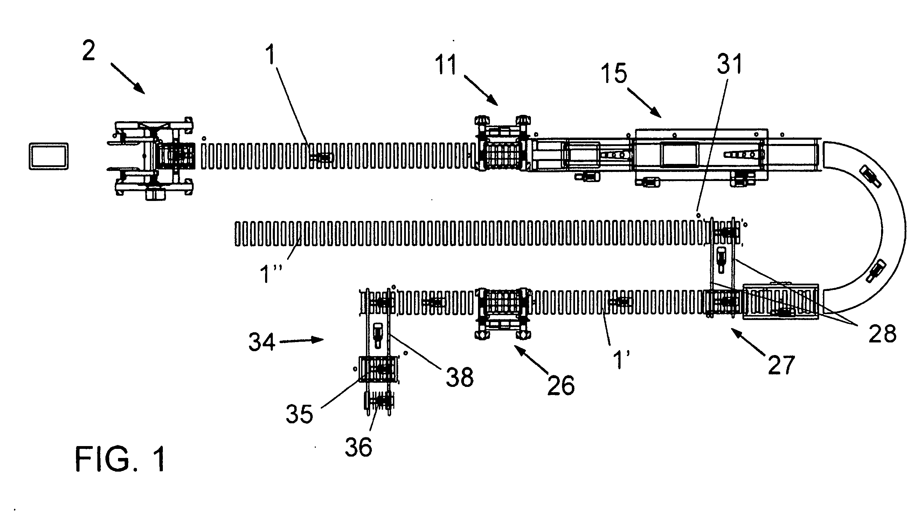

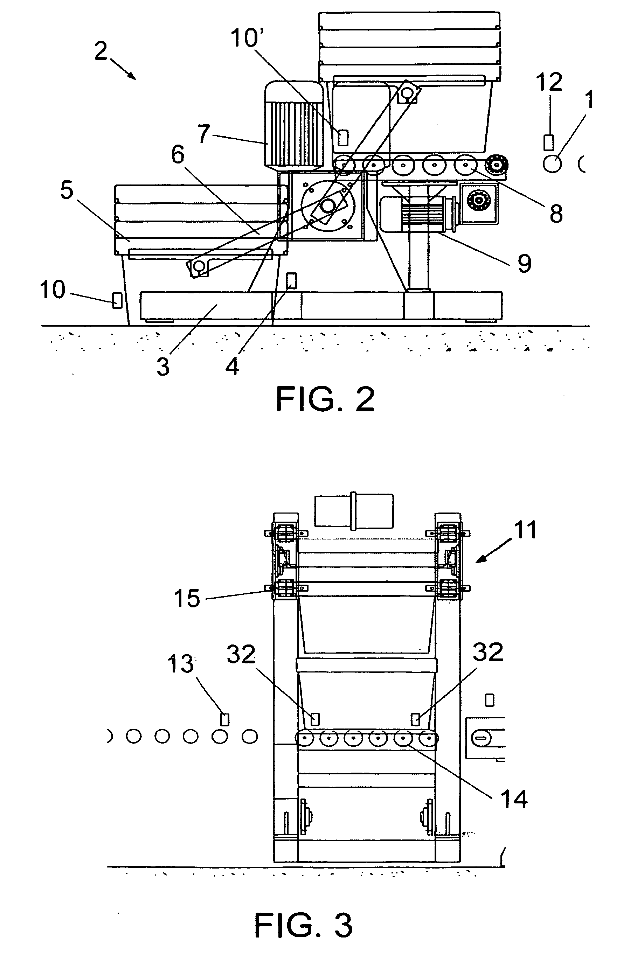

In view of the indicated figures, and especially Figures 1 and 2, it can be observed how the installation proposes having a motorised line of rollers (1), at whose entrance there is a lift (2), in charge of raising stacks of 25 trays from the floor to the roller line (1), incorporating a lower chassis (3), a photoelectric sensor (4) that detects the presence of the trays (5), so that using a pair of arms (5) driven by a geared motor group (7), the stack of trays is placed on a roller line driven by a geared motor group (9) moving this stack to the roller line (1).

In order to avoid collisions in raising and lowering the stacks, the machine includes two photoelectric barriers (10-10').

The roller line (1) takes the stack to the separating machine (11), that shown in Figure 3, comprised of a column in whose middle area there is a section of rollers (14) continuing the roller line (1) next to which there are two sensors (32) to control the position of the stack at the time of entering the machine.

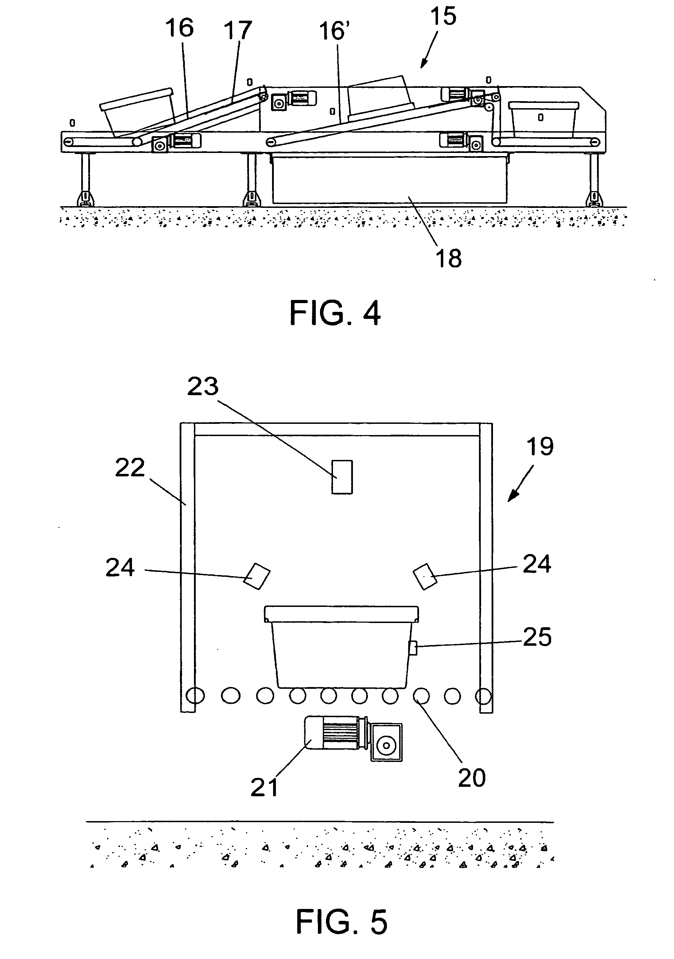

This column incorporates some pneumatic claws (15) that are closed on the sides of the tray, holding it, and consequently the rest of the trays are stacked into it above, so that to separate it the machine is situated at the level of the second tray from the bottom, it closes on it, holding it, and proceeds to move said tray vertically, so that the lower tray is automatically separated, immediately connecting the drive of the roller section (14) that takes the separated tray alone towards the overturning machine (15), that shown in Figure 4, which, through a pair of conveyor belts (16), open in their middle area and assisted on the ends by the respective overturning supports (17), allow in the first place to turn the tray over 180°, emptying its content into a bin (18), and subsequently returning to its initial position by means of the corresponding overturning.

It can be highlighted that between the lift (2) and the separator (11) there is a roller line section (1) with sufficient length as to permit accumulating several stacks of trays, including a photoelectric saturation sensor (12) and a pneumatic limit (13) that doses out and controls the entry of stacks to the separator.

The outlet of the overturning machine is connected to a machine that inspects for dirt by artificial vision (19), in which there is a roller section (20), as a continuation of the roller line (1), a mechanism activated by means of a geared motor group (21). The machine includes a casing (22), open on both ends, in which a system of artificial vision is set up, which is comprised of a camera (23), a data processing unit, as well as LED projectors (24) that provide stable lighting conditions, so that through image-comparing software it detects the possible adhered dirt, as well as moisture, having provided that the flash of the camera (23) is done through a photoelectric sensor (25) that would detect the presence of the tray in the proper position to be photographed.

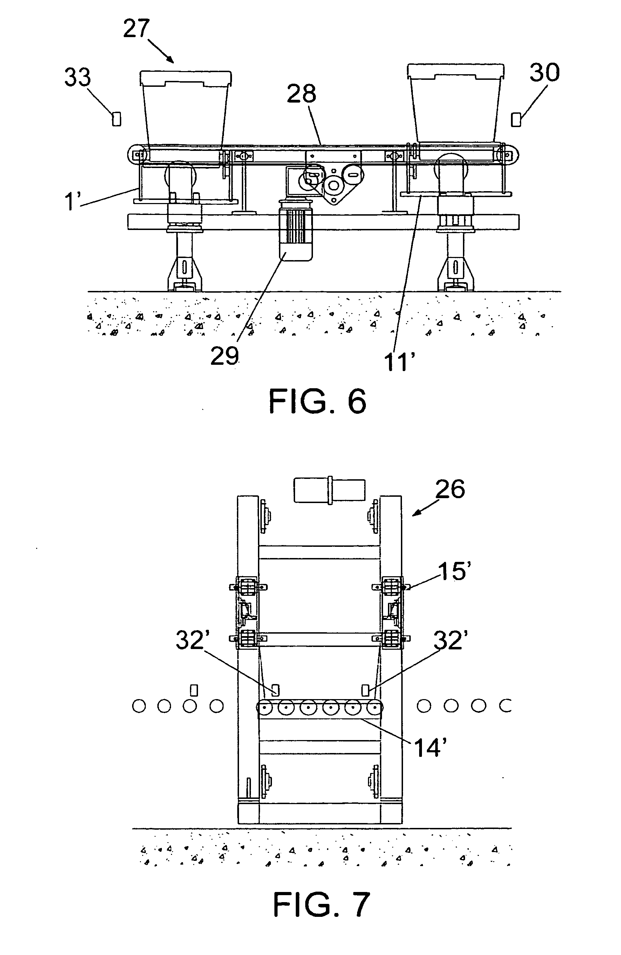

At the outlet of this machine that inspects for dirt by artificial vision (19) the roller line (1) diverges into two branches, a first branch (1') that takes the clean trays to a stacking machine (26), and a second branch (1") that by means of a diverter (27), that shown in the close up of Figure 6, takes away the dirty trays for their proper cleaning.

This diverter (27) is automatically activated upon detection of a dirty tray, so that through a photoelectric sensor (33) the drive of the rollers of the branch (1') stops and some belts (28) driven by a geared motor group (29) start up and move the tray to the branch (1"), a position that is detected through the corresponding photoelectric sensor (30), with this branch (1") including a photoelectric sensor (31) for the saturation of the line.

The aforementioned stacking machine (26) will have a structure similar to that of the separator (11), with a column in the middle of which is a section of rollers (14'), two photoelectric sensors (32') for the control of the tray's position at the time it enters the machine, as well as some pneumatic claws (15') that close on the trays and move vertically, so that in this case, the claws (15) also move to the position immediately above the lower tray in order to proceed to open, depositing in that tray the set of trays that may have accumulated and stacked, in order to then move downwards a certain distance in order to hold the lower tray, and raise the entire stack allowing the entry of a new tray, and inserting in it the accumulated stack, repeating the process until reaching the programmed stack level.

Finally, and as an option, at the outlet of the installation there can be a second diverter (34), in charge of taking the checked and stacked trays to the two warehouses with rollers (35) and (36), for which a photoelectric sensor (37) to stop/start the motion of the corresponding rollers of the stopped line (1") after which some belts (38) connected to a geared motor group (41) start up which will divert crosswise the stacks of trays towards the corresponding roller warehouses (35) and (36), which will have photoelectric sensors (39-40) to stop the corresponding belts and activate the complementary rollers.

## Claims

1. Installation for the processing of trays, **characterised by** being comprised by a roller line (1) at the entrance of which is set up a lift (2) equipped with means for lifting a stack of trays up to the level of the conveyor rollers of the roller line (1), a roller line (1) that, after a warehouse section includes a separating machine (11), equipped with hydraulically driven claws (15) that can move vertically, formally and dimensionally appropriate for separating the stack into units by means of raising the stack, after which an overturning machine (15) is set up, in which there is a series of slanted conveyor belts (16-16') and rotating supports that receive and overturn the trays, by which the tray is overturned through the effect of gravity; after this overturning machine (15) a machine to inspect for dirt by artificial vision (19) is set up, equipped with a camera connected to hardware with a software program through which possible dirt adhered to the trays, as well as moisture, is detected, including at the outlet of this machine two branches, one branch (1") diverts the trays that are considered not to have passed the required standards of cleanliness, and a main branch (1') that leads to a stacking machine (26'), with a structure similar to that of the separating machine (11), but with the opposite function.

2. Installation for the processing of trays, according to claim 1, **characterised by** setting up at the outlet of the stacker (26) a diverter (34) in which a series of belts (38) are included driven by a geared motor group (41), that, through the use of a series of photoelectric sensors (37, 30, 40) to position the stacks of trays, divert them towards different roller warehouses (35-36).

3. Installation for the processing of trays, according to claim 1, **characterised by** the lift (2) including a lower chassis (3) on which there is a photoelectric sensor (4) that detects the presence of trays (5), having a pair of arms (6) that lift the stack of trays, driven by a geared motor group (7), that discharge said stack on a line of rollers driven by a geared motor group (9) aligned with the roller line (1), having provided that the machine with two photoelectric barriers (10-10') to limit the movement of the arms (6).

4. Installation for the processing of trays, according to claim 1, **characterised by** the separator (11); this is comprised by a column in whose middle area there is a section of rollers (14) continuing from the roller line (1) next to which there are two photoelectric sensors (32) for the control of the position of the stack at the time of entering the machine, a column that includes some pneumatic claws (15), equipped with means to close on the sides of the second tray from the bottom, as well as moving upwards.

5. Installation for the processing of trays, according to claim 1, **characterised by** the machine to inspect for dirt by artificial vision (19); it includes a roller section (20), continuing the roller line (1), a mechanism driven by a geared motor group (21), as well as a casing (22), open on both ends, in which there is a system of artificial vision, which includes a camera (23), a data processing unit, as well as LED projectors (24) to light the inside of the tray, and a photoelectric sensor (25) for positioning the trays and shooting the camera (23), a set that includes dirt detection software, as well as moisture, for the discrimination of the trays leaving the machine.

6. Installation for the processing of trays, according to claim 1, **characterised by** setting up, at the outlet of the machine to inspect for dirt by artificial vision (19), a diverter (27), which functions according to the indications sent by the preceding machine, equipped with a photoelectric sensor (33) so that it stops the rollers of branch (1') and activates some belts (28) driven by a geared motor group (29) that move the tray to the branch (1"), position that is detected through the corresponding photoelectric sensor (30), with this branch (1") including a photoelectric sensor (31) for the saturation of the line.

## Patentansprüche

1. Einrichtung für die Bearbeitung von Tabletts, **dadurch gekennzeichnet, dass** diese eine Walzenreihe (1) besitzt, an deren Anfang sich eine Hebevorrichtung (2) befindet, die mit Mitteln für das Anheben eines Tablettstapels bis zu der Höhe von Laufrollen an einem Förderband der Walzenreihe (1) ausgestattet ist, einer Walzenreihe (1), die hinter einem Lagerbereich eine Trennmaschine (11) besitzt, die mit hydraulisch betriebenen Krallen (15) ausgestattet ist, die senkrecht, förmlich und dimensional auf geeignete Weise bewegt werden können, so dass die einzelnen Elemente des Stapels durch das Anheben des Stapels getrennt werden können. An dieses Gerät schließt sich eine Kippmaschine (15) an, die dann zum Einsatz kommt; in dieser befinden sich eine Reihe von geneigten Förderbändern (16, 16') und sich drehende Auflagen, von denen die Tabletts entgegen genommen und umgestürzt werden, wobei die Tabletts durch die Wirkung der Schwerkraft umkippen. Nach dieser Kippmaschine (15) ist eine Kontrollmaschine für die Verschmutzung mit einem künstlichen Visionssystem (19) angebracht. Diese ist mit einer, an eine Hardware mit einem Softwareprogramm angeschlossene Kamera ausgerüstet, von welcher eine an den Tabletts anhaftende Verschmutzung sowie Senf festgestellt werden kann. Am Ausgang dieser Maschine befinden sich ebenfalls zwei Verzweigungen, eine Verzweigung (1 "), auf der die Tabletts, welche die vorgeschriebenen Sauberkeitsstandards nicht erfüllt haben, umgeleitet werden und eine Hauptverzweigung (1'), die zu einer Stapelmaschine (26') führt, die einen der Trennmaschine (11) ähnlichen Aufbau, aber eine gegenteilige Funktion besitzt.

2. Einrichtung für die Bearbeitung von Tabletts, gemäß dem ersten Patentanspruch, **dadurch gekennzeichnet, dass** sich am Ausgang der Stapelmaschine (26) ein Leitblech (34) mit einer Reihe von Bändern (38) befindet, die durch eine Triebwerkmotorgruppe (41) angetrieben werden, die durch den Einsatz verschiedener photoelektrischer Sensoren (37, 30, 40) den Tablettstapel ausrichten und ihn anschließend in verschiedene Walzenlager (35, 36) führen.

3. Einrichtung für die Bearbeitung von Tabletts, gemäß dem ersten Patentanspruch, **dadurch gekennzeichnet, dass** sie mit einer Hebevorrichtung (2) ausgestattet ist, zu der ein niedriger Gestellrahmen (3) gehört, an dem sich ein photoelektrischer Sensor (4) befindet, der das Vorhandensein von Tabletts (5) feststellt. Die Hebevorrichtung ist mit zwei Armen (6) ausgestattet, durch die sich der Tablettstapel anheben lässt, und die durch eine Triebwerkmotorgruppe (7) angetrieben werden. Sie entladen den o. g. Stapel auf eine Reihe von Walzen, die durch eine Triebwerkmotorgruppe (9) angetrieben werden, die auf die Walzenreihe (1) ausgerichtet sind, wobei die Maschine mit zwei photoelektrischen Schranken (10-10') zur Bewegungseinschränkung der Arme (6) ausgestattet ist.

4. Einrichtung für die Bearbeitung von Tabletts, gemäß dem ersten Patentanspruch, **dadurch gekennzeichnet, dass** eine Trennmaschine (11) vorhanden ist. Diese enthält eine Säule, in deren Mitte sich eine Walzenstrecke (14) befindet. An diese schließt sich eine Walzenreihe (1) an, neben der zwei photoelektrische Sensoren (32) für die Kontrolle des Stapels während dieser in die Maschine fährt, angebracht sind. In die Säule sind einige druckbetätigte Klauen angelassen (15), die mit Mitteln für das seitliche Aufheben des zweiten Tabletts von der Unterseite und für dessen Anheben ausgestattet sind.

5. Einrichtung für die Bearbeitung von Tabletts, gemäß dem ersten Patentanspruch, **dadurch gekennzeichnet, dass** eine Kontrollmaschine für die Verschmutzung mit einem künstlichen Visionssystem (19) angebracht ist. In dieser befindet sich eine Walzenstrecke (20), an die sich eine Walzenreihe (1), ein von einer Triebwerkmotorgruppe (21) angetriebener Mechanismus, sowie ein beidseitig offenes Gehäuse (22) anschließt, in dem sich ein künstliches Visionssystem befindet, in dem eine Kamera (23), eine Datenverarbeitungseinheit sowie LED-Projektoren (24) zur Beleuchtung der Innenseite des Tabletts und ein photoelektrischer Sensoren (25) für das Ausrichten der Tabletts und das Auslösen der Kamera (23) untergebracht sind. Das Gerät enthält eine Software für das Feststellen von Verschmutzungen und Senf, mit der sich die, die Maschine verlassenden Tabletts unterschieden lassen.

6. Einrichtung für die Bearbeitung von Tabletts, gemäß dem ersten Patentanspruch, **dadurch gekennzeichnet, dass** eine Einrichtung, die am Maschinenausgang für die Kontrolle von Verschmutzungen durch ein künstliches Visionssystem (19) sorgt, und ein Leitblech (27) vorhanden sind. Das Leitblech funktioniert gemäß der von der vorstehend genannten Maschine gesendeten Angaben und ist mit einem photoelektrischen Sensor (33) ausgerüstet, so dass die Walzen der Hauptverzweigung (1') angehalten und einige Bänder (28) aktiviert werden, die von einer Triebwerkmotorgruppe (29) angetrieben werden. Sie bringen das Tablett zu der Verzweigung (1 ") in eine Stellung, die durch den entsprechenden photoelektrischen Sensor (30) festgestellt wird. Diese Verzweigung (1") enthält ebenfalls einen photoelektrischen Sensor (31) für die Ausnutzung der Reihe.

## Revendications

1. Installation pour le traitement de bacs, **caractérisée en ce qu'**elle est composée d'une ligne de rouleaux (1) à l'entrée de laquelle est mis en place un élévateur (2) équipé de moyens d'élévation d'une pile de bacs au niveau des rouleaux de transport de la ligne de rouleaux (1), une ligne de rouleaux (1) qui, après une section de stockage comprend une machine séparatrice (11), équipée de griffes à entraînement hydraulique (15) pouvant se déplacer verticalement, formellement et dimensionnellement aptes à séparer la pile en unités par des moyens d'élévation de la pile, après lesquels une machine de retournement (15) est mise en place, dans laquelle se trouve une série de bandes transporteuses inclinées (16, 16') et de supports tournants recevant et retournant les bacs, par le biais desquels le bac est retourné par l'effet de la gravité ; après cette machine de retournement (15) une machine pour inspecter la saleté par vision artificielle (19), est mise en place, équipée d'une caméra connectée à un équipement informatique par un programme logiciel à travers lequel est détectée la saleté potentielle ayant adhéré aux bacs, ainsi que l'humidité, comprenant à la sortie de cette machine deux branches, une branche (1") dévie les bacs qui sont considérés comme n'ayant pas passé les conditions requises de propreté, et une branche principale (1') qui conduit à une machine empileuse (26'), avec une structure similaire à celle de la machine séparatrice (11), mais avec la fonction inverse.

2. Installation pour le traitement de bacs, selon la revendication 1, **caractérisée en ce qu'**est monté à la sortie de l'empileuse (26) un déviateur (34) dans lequel est comprise une série de courroies (38) actionnées par un groupe motoréducteur (41), qui, par l'utilisation de la série de capteurs photoélectriques (37, 30, 40) de positionnement de la pile de bacs, les dévie vers différents dépôt de rouleaux (35, 36).

3. Installation pour le traitement de bacs, selon la revendication 1, **caractérisée en ce que** l'élévateur (2) comprend un châssis inférieur (3) sur lequel se trouve un capteur photoélectrique (4) qui détecte la présence de bacs (5), ayant une paire de bras (6) qui soulèvent la pile de bacs, actionnés par un groupe motoréducteur (7), qui déchargent ladite pile sur une ligne de rouleaux actionnés par un groupe motoréducteur (9) aligné avec la ligne de rouleaux (1), étant prévu que la machine comprend deux barrages photoélectriques (10, 10') afin de limiter le déplacement des bras (6).

4. Installation pour le traitement de bacs, selon la revendication 1, **caractérisée en ce que** le séparateur (11) est composé d'une colonne dont la zone centrale comprend une section de rouleaux (14) en continuation de la ligne de rouleaux (1) à côté desquels se trouvent deux capteurs photoélectriques (32) pour le contrôle de la position de la pile au moment de l'entrée dans la machine, colonne qui comprend des griffes pneumatiques (15), équipées de moyens de fermeture sur les côtés du second bac en partant du bas, ainsi que de déplacement vers le haut.

5. Installation pour le traitement de bacs, selon la revendication 1, **caractérisée en ce que** la machine à inspecter la saleté par vision artificielle (19) comprend une section de rouleaux (20), en continuation de la ligne de rouleaux (1), mécanisme actionné par un groupe motoréducteur (21), ainsi qu'une carcasse (22), ouverte aux deux extrémités, dans laquelle se trouve un système de vision artificielle, qui comprend une caméra (23), un système de traitement des donnés, ainsi que des projecteurs LED (24) pour éclairer l'intérieur du bac, et un capteur photoélectrique (25) de positionnement des bacs et de déclenchement de la camera, un ensemble qui comprend un logiciel de détection de la saleté, ainsi que de l'humidité, pour la discrimination des bacs sortant de la machine.

6. Installation pour le traitement de bacs, selon la revendication 1, **caractérisée en ce que**, à la sortie de la machine pour inspecter la saleté par vision artificielle (19), un déviateur (27) est mis en place, fonctionnant selon les indications envoyées par la machine précédente, équipé d'un capteur photoélectrique (33) qui arrête les rouleaux de la branche (1') et active des courroies (28) actionnées par un groupe motoréducteur (29) qui déplace le bac à la branche (1"), position qui est détectée à travers le capteur photoélectrique (30) correspondant, cette branche (1") comprenant un capteur photoélectrique (31) pour la saturation de la ligne.
